(19) Europäisches Patentamt

European Patent Office

Office européen des brevets

(11) **EP 4 509 628 A1**

(12) **EUROPEAN PATENT APPLICATION**
published in accordance with Art. 153(4) EPC

(43) Date of publication:
**19.02.2025 Bulletin 2025/08**

(21) Application number: **23823438.9**

(22) Date of filing: **01.02.2023**

(51) International Patent Classification (IPC):
*C22C 38/00* (2006.01)  *C21D 9/46* (2006.01)
*C22C 38/48* (2006.01)  *C22C 38/60* (2006.01)

(52) Cooperative Patent Classification (CPC):
**C21D 9/46; C22C 38/00; C22C 38/48; C22C 38/60**

(86) International application number:
**PCT/JP2023/003284**

(87) International publication number:
**WO 2023/243133 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2022  JP 2022097640**

(71) Applicant: **JFE Steel Corporation
Tokyo 100-0011 (JP)**

(72) Inventors:
• **NAKAMURA Tetsuyuki**
  **Tokyo 100-0011 (JP)**
• **YOSHINO Masataka**
  **Tokyo 100-0011 (JP)**
• **SUGIHARA Reiko**
  **Tokyo 100-0011 (JP)**

(74) Representative: **Haseltine Lake Kempner LLP
One Portwall Square
Portwall Lane
Bristol BS1 6BH (GB)**

(54) **FERRITIC STAINLESS STEEL AND PRODUCTION METHOD THEREFOR**

(57)  Provided is a ferritic stainless steel having excellent high-temperature proof stress and excellent oxidation resistance. A ferritic stainless steel comprises a predetermined chemical composition, and has an amount of solute Nb of more than 1.00 mass%.

*FIG. 1*

EP 4 509 628 A1

**Description**

TECHNICAL FIELD

The present disclosure relates to a ferritic stainless steel and a production method therefor. The present disclosure particularly relates to a ferritic stainless steel having excellent high-temperature proof stress and excellent oxidation resistance and suitable for use in exhaust system members used at high temperatures. Examples of exhaust system members used at high temperatures include exhaust pipes, exhaust manifolds, converter cases, and mufflers of automobiles and motorcycles (hereafter also referred to as automotive exhaust pipes, etc.), and exhaust ducts of thermal power plants.

BACKGROUND

Exhaust system members such as automotive exhaust pipes are required to have excellent high-temperature proof stress.

As materials for such automotive exhaust system members, ferritic stainless steels such as Type 429 (14 mass% Cr-0.9 mass% Si-0.4 mass% Nb) containing Nb and Si in combination are often used.

Also developed is SUS444 (19 mass% Cr-0.4 mass% Nb-2 mass% Mo) defined in JIS G 4305, which contains Nb and Mo in combination to improve high-temperature proof stress.

JP 2009-215648 A (PTL 1) discloses "A ferritic stainless steel sheet with excellent high-temperature strength, containing, in mass%, C: 0.01 % or less, N: 0.02 % or less, Si: 0.05 % to 1 %, Mn: more than 0.6 % and 2 % or less, Cr: 15 % to 30 %, Mo: 1 % to 4 %, Cu: 1 % to 3.5 %, Nb: 0.2 % to 1.5 %, Ti: 0.05 % to 0.5 %, and B: 0.0002 % to 0.01 % with the balance consisting of Fe and inevitable impurities".

JP H06-088168 A (PTL 2) discloses "A heat-resistant ferritic stainless steel sheet with excellent high-temperature strength and weldability, containing, in mass%, C: 0.02 % or less, Si: less than 0.6 %, Mn: 0.6 % or more and 2.0 % or less, S: 0.006 % or less, P: 0.04 % or less, Cr: 17.0 % or more and 22.0 % or less, Nb: more than 0.6 % and 1.5 % or less, Mo: 1.0 % or more and 3.0 % or less, V: 0.01 % or more and 0.5 % or less, Cu: 0.1 % or more and less than 0.3 %, N: 0.02 % or less, Al: 0.005 % or more and 0.05 % or less, and O: 0.012 % or less where C + N $\leq$ 0.03 %, Mn/S $\geq$ 200, and 16.8 $\leq$ 0.6Cr + 1.1Mo + 8.2Nb $\leq$ 24.0, with the balance consisting of Fe and production-related inevitable impurities".

As an example of ferritic stainless steel containing a large amount of W (hereafter also referred to as W-containing ferritic stainless steel), JP 2004-018921 A (PTL 3) discloses "A ferritic stainless steel that is soft at room temperature and has excellent high-temperature oxidation resistance, comprising a composition containing, in mass%, C: 0.02 % or less, Si: 0.1 % or less, Mn: 2.0 % or less, Cr: 12.0 % to 16.0 %, Mo: 1.0 % to 5.0 %, W: more than 2.0 % and 5.0 % or less, Nb: 5(C + N) to 1.0 %, and N: 0.02 % or less with the balance consisting of Fe and inevitable impurities".

CITATION LIST

Patent Literature

    PTL 1: JP 2009-215648 A
    PTL 2: JP H06-088168 A
    PTL 3: JP 2004-018921 A

SUMMARY

(Technical Problem)

Regarding high-temperature proof stress, for example, the 0.2 % proof stress at 800 °C is about 30 MPa in Type 429, about 45 MPa in SUS444, and about 52 MPa in W-containing ferritic stainless steel as disclosed in PTL 3. Thus, SUS444 and W-containing ferritic stainless steel each have proof stress about 1.5 times to 1.7 times higher than Type 429. The ferritic stainless steel sheets disclosed in PTL 1 and PTL 2 also have high-temperature proof stress at a similar level to SUS444 and W-containing ferritic stainless steel.

In recent years, the use of thinner materials may be desired in order to reduce the weight of automotive bodies, for example. In this case, even higher high-temperature proof stress than conventional ones is required.

For materials used in environments exposed to high-temperature exhaust gases, such as automotive exhaust system members, oxidation resistance is also an important property. If oxidation resistance is insufficient, a large amount of oxide forms during use. In particular, if a large amount of oxide forms in a thin material, the thickness becomes insufficient during use, which adversely affects durability. In addition, the oxide tends to exfoliate, leading to problems such as clogging in the exhaust system member due to the exfoliated oxide.

It could therefore be helpful to provide a ferritic stainless steel that has excellent high-temperature proof stress far superior to conventional ones and excellent oxidation resistance.

It could also be helpful to provide a production method for the ferritic stainless steel.

Herein, the expression "excellent high-temperature proof stress" means that the 0.2 % proof stress at 800 °C is 60 MPa or more.

The expression "excellent oxidation resistance" means that the mass gain by oxidation when held in an air atmosphere at 1000 °C for 200 hours is 20 $g/m^2$ or less.

The mass gain by oxidation is calculated using the following formula:

[Mass gain by oxidation $(g/m^2)$] = [Mass gain of test piece between before and after holding (g)]/[Surface area of test piece $(m^2)$].

(Solution to Problem)

Upon careful examination, we discovered the following:

(A) By appropriately controlling the chemical composition, in particular, by adding Nb: 1.10 % to 3.00 % to cause the amount of solute Nb to be more than 1.00 mass%, high-temperature proof stress is significantly improved as compared with conventional ones.

(B) By adding Si: 0.05 % to 2.00 %, Mn: 0.05 % to 0.80 %, and Al: 0.01 % to 0.50 % and satisfying the below-described formula (1), oxidation resistance can be greatly improved while ensuring excellent high-temperature proof stress.

(C) An effective way of ensuring the specified amount of solute Nb is to prepare a material to be treated whose chemical composition is appropriately controlled as described above and subject the material to be treated to a final annealing treatment at a final annealing temperature of 1120 °C or higher.

The present disclosure is based on these discoveries and further studies.

We thus provide:

[1] A ferritic stainless steel comprising a chemical composition containing (consisting of), in mass%, C: 0.015 % or less, Si: 0.05 % to 2.00 %, Mn: 0.05 % to 0.80 %, P: 0.040 % or less, S: 0.010 % or less, Al: 0.01 % to 0.50 %, N: 0.020 % or less, Ni: 0.02 % to 1.00 %, Cr: 14.0 % to 25.0 %, Nb: 1.10 % to 3.00 %, and Mo: 1.0 % to 4.0 % with a balance consisting of Fe and inevitable impurities, wherein the following formula (1) is satisfied:

$$[Si] - [Mn] > 0.00 \qquad \dots (1)$$

where [Si] and [Mn] are respectively Si content and Mn content in mass% in the chemical composition, and an amount of solute Nb is more than 1.00 mass%.

[2] The ferritic stainless steel according to [1], wherein the chemical composition further contains, in mass%, one or more selected from Cu: 2.00 % or less, V: 0.50 % or less, W: 5.0 % or less, Ti: 0.30 % or less, REM: 0.50 % or less, Zr: 0.50 % or less, Co: 0.50 % or less, B: 0.0050 % or less, Ca: 0.0050 % or less, Mg: 0.0050 % or less, Sb: 0.50 % or less, and Sn: 0.50 % or less.

[3] A production method for the ferritic stainless steel according to [1] or [2], the production method comprising: preparing a material to be treated having the chemical composition according to [1] or [2]; and subjecting the material to be treated to a final annealing treatment at a final annealing temperature of 1120 °C or higher.

(Advantageous Effect)

It is thus possible to obtain a ferritic stainless steel that has excellent high-temperature proof stress far superior to conventional ones, specifically, a 0.2 % proof stress at 800 °C of 60 MPa or more, and excellent oxidation resistance. Such a ferritic stainless steel, even when reduced in thickness by about 50 % to 30 %, has a similar level of proof stress to Type 429 (0.2 % proof stress at 800 °C: about 30 MPa) and SUS444 (0.2 % proof stress at 800 °C: 45 MPa). Therefore, for example, the use of the ferritic stainless steel in automotive exhaust system members greatly contributes to reducing the weight of automotive bodies and consequently reducing carbon dioxide emissions through improvement in fuel efficiency.

BRIEF DESCRIPTION OF THE DRAWINGS

In the accompanying drawings:

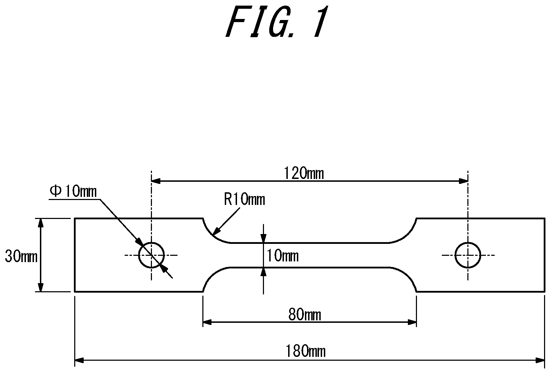

FIG. 1 is a schematic diagram of a test piece used to evaluate high-temperature proof stress.

DETAILED DESCRIPTION

Embodiments of the present disclosure will be described below.
First, the chemical composition of a ferritic stainless steel according to an embodiment of the present disclosure will be described. While the unit of the content of each element in the chemical composition is "mass%", the content is expressed simply in "%" unless otherwise noted.

C: 0.015 % or less

C is an element that is effective in enhancing the strength of the steel. If the C content is more than 0.015 %, toughness and formability decrease. C also combines with Nb and precipitates as carbide. Accordingly, as the C content increases, the amount of precipitated Nb carbide increases and the amount of solute Nb decreases. This makes it impossible to achieve excellent high-temperature proof stress. The C content is therefore 0.015 % or less. From the viewpoint of ensuring formability, the C content is preferably 0.010 % or less. The C content is more preferably 0.008 % or less. From the viewpoint of ensuring the strength of automotive exhaust system members, the C content is preferably 0.003 % or more. The C content is more preferably 0.004 % or more.

Si: 0.05 % to 2.00 %

Si is an important element that promotes the formation of $Cr_2O_3$ to improve oxidation resistance. In order to achieve this effect, the Si content is 0.05 % or more. If the Si content is more than 2.00 %, workability decreases. Si also promotes the precipitation of intermetallic compounds with a composition represented by $Fe_2Nb$, called Laves phase (such intermetallic compounds are hereafter also simply referred to as Laves phase). Accordingly, if the Si content is excessively high, the amount of solute Nb decreases, making it impossible to achieve excellent high-temperature proof stress. The Si content is therefore 2.00 % or less. The Si content is preferably 1.00 % or less. The Si content needs to be in this range and also satisfy the below-described formula (1), as described later.

Mn: 0.05 % to 0.80 %

Mn is an element that is contained as a deoxidizer and also to enhance the strength of the steel. In order to achieve this effect, the Mn content is 0.05 % or more. The Mn content is preferably 0.10 % or more. If the Mn content is excessively high, γ phase forms at high temperatures and oxidation resistance decreases. The Mn content is therefore 0.80 % or less. The Mn content is preferably 0.50 % or less. The Mn content needs to be in this range and also satisfy the below-described formula (1), as described later.

P: 0.040 % or less

P is a harmful element that causes a decrease in the toughness of the steel. Hence, it is desirable to reduce P as much as possible. The P content is therefore 0.040 % or less. The P content is preferably 0.030 % or less. No lower limit is placed on the P content. However, since excessive dephosphorization leads to an increase in cost, the P content is preferably 0.005 % or more.

S: 0.010 % or less

S decreases elongation and r value and adversely affects formability. S is also a harmful element that causes a decrease in corrosion resistance, which is a basic property of stainless steel. Hence, it is desirable to reduce S as much as possible. The S content is therefore 0.010 % or less. The S content is preferably 0.003 % or less. No lower limit is placed on the S content. However, since excessive desulfurization leads to an increase in cost, the S content is preferably 0.0005 % or more.

Al: 0.01 % to 0.50 %

Al is an element that has the effect of improving oxidation resistance. In order to achieve this effect, the Al content is 0.01 % or more. The Al content is preferably 0.05 % or more. If the Al content is more than 0.50 %, the formation of $Cr_2O_3$ is hindered and oxidation resistance decreases. The Al content is therefore 0.50 % or less. The Al content is preferably 0.35 % or less.

N: 0.020 % or less

N is an element that decreases the toughness and formability of the steel. In particular, if the N content is more than 0.020 %, toughness and formability decrease noticeably. N also combines with Nb and precipitates as nitride. Accordingly, as the N content increases, the amount of solute Nb in the steel decreases, making it impossible to achieve excellent high-temperature proof stress. The N content is therefore 0.020 % or less. It is desirable to reduce N as much as possible from the viewpoint of ensuring toughness and formability. The N content is therefore preferably less than 0.015 %. No lower limit is placed on the N content. However, since excessive denitrification leads to an increase in cost, the N content is preferably 0.004 % or more.

Ni: 0.02 % to 1.00 %

Ni is an element that improves the toughness of the steel. In order to achieve this effect, the Ni content is 0.02 % or more. The Ni content is preferably 0.05 % or more. Ni is a strong γ phase forming element. Ni forms γ phase at high temperatures, causing a decrease in oxidation resistance. The Ni content is therefore 1.00 % or less. The Ni content is preferably 0.50 % or less.

Cr: 14.0 % to 25.0 %

Cr is an important element that is effective in improving corrosion resistance and oxidation resistance that are characteristics of stainless steel. In order to achieve this effect and especially achieve sufficient oxidation resistance, the Cr content is 14.0 % or more. The Cr content is preferably 18.0 % or more. Cr hardens the steel and decreases its ductility by solid-solution-strengthening the steel at room temperature. Especially if the Cr content is more than 25.0 %, the steel hardens and decreases in ductility noticeably. The Cr content is therefore 25.0 % or less. The Cr content is preferably 20.0 % or less.

Nb: 1.10 % to 3.00 %

In order to achieve the desired high-temperature proof stress, the amount of solute Nb needs to be more than 1.00 mass%, as described later. Accordingly, a treatment of dissolving Nb, specifically, a final annealing treatment at a final annealing temperature of 1120 °C or higher, is performed. Even in this case, Nb may remain as carbonitrides or intermetallic compounds without being dissolved. Hence, from the viewpoint of achieving the specified amount of solute Nb, the Nb content is 1.10 % or more. The Nb content is preferably 1.60 % or more. If the Nb content is more than 3.00 %, Laves phase tends to precipitate. This causes, for example, a decrease in the toughness of the hot-rolled steel sheet, leading to lower productivity. The Nb content is therefore 3.00 % or less. The Nb content is preferably 2.00 % or less.

Mo: 1.0 % to 4.0 %

Mo is an element that dissolves in the steel to improve the high-temperature strength of the steel and thus enhance high-temperature proof stress. In order to achieve this effect, the Mo content is 1.0 % or more. The Mo content is preferably 1.6 % or more. If the Mo content is more than 4.0 %, coarse σ phase precipitates, as a result of which the toughness of the steel decrease greatly. The Mo content is therefore 4.0 % or less. The Mo content is preferably 3.0 % or less.

$$[Si] - [Mn] > 0.00 \qquad \dots (1)$$

As mentioned above, Si promotes the formation of $Cr_2O_3$ in a high-temperature oxidizing environment. Moreover, Mn forms $MnCr_2O_4$. Comparing $Cr_2O_3$ and $MnCr_2O_4$, $Cr_2O_3$ is denser and less likely to exfoliate. $Cr_2O_3$ is therefore more effective in enhancing oxidation resistance. Hence, in order to achieve excellent oxidation resistance, it is necessary to preferentially form $Cr_2O_3$ rather than $MnCr_2O_4$. Here, which of $MnCr_2O_4$ and $Cr_2O_3$ is preferentially formed varies depending on the magnitude relationship between the Si content and the Mn content. Specifically, if Si - Mn > 0.00, i.e. if the Si content is more than the Mn content, $Cr_2O_3$ is preferentially formed. If Si - Mn ≤ 0.00, i.e. the Si content is less than or equal to the Mn content, $MnCr_2O_4$ is preferentially formed. Accordingly, from the viewpoint of achieving excellent oxidation resistance, it is important to satisfy the foregoing formula (1). Preferably, [Si] - [Mn] > 0.05.

The basic chemical composition of the ferritic stainless steel according to an embodiment of the present disclosure has been described above. The chemical composition of the ferritic stainless steel according to an embodiment of the present disclosure may further contain at least one of the following optionally added elements, either alone or in combination:

Cu: 2.00 % or less,
V: 0.50 % or less,
W: 5.0 % or less,
Ti: 0.30 % or less,
REM: 0.50 % or less,
Zr: 0.50 % or less,
Co: 0.50 % or less,
B: 0.0050 % or less,
Ca: 0.0050 % or less,
Mg: 0.0050 % or less,
Sb: 0.50 % or less, and
Sn: 0.50 % or less.

Cu: 2.00 % or less

Cu has the effect of greatly increasing the strength (proof stress) of the steel by finely precipitating as ε-Cu at around 600 °C. In order to achieve this effect, the Cu content is preferably 0.30 % or more. The Cu content is more preferably 1.00 % or more. If the Cu content is more than 2.00 %, toughness decreases. Accordingly, in the case where Cu is added, the Cu content is 2.00 % or less. The Cu content is preferably 1.80 % or less.

V: 0.50 % or less

V is an element that is effective in improving the workability of the steel. Moreover, as a result of adding V, V combines with N in the steel and precipitates as fine nitrides. This prevents Nb from combining with N to form nitrides. Thus, V acts advantageously to ensure the specified amount of solute Nb and further increases the effect of improving high-temperature proof stress. In order to achieve this effect, the V content is preferably 0.01 % or more. The V content is more preferably 0.03 % or more. If the V content is more than 0.50 %, toughness decreases. Accordingly, in the case where V is added, the V content is 0.50 % or less. The V content is preferably 0.25 % or less.

W: 5.0 % or less

W is an element that dissolves in the steel to enhance the high-temperature strength of the steel. In order to achieve this effect, the W content is preferably 0.1 % or more. The W content is more preferably 1.0 % or more. If the W content is more than 5.0 %, surface characteristics degrade. Accordingly, in the case where W is added, the W content is 5.0 % or less. The W content is preferably 3.5 % or less.

Ti: 0.30 % or less

Ti preferentially combines with C and N over Nb and precipitates as TiC and TiN. This prevents Nb from combining with N to form nitrides. Thus, Ti acts advantageously to ensure the specified amount of solute Nb and further increases the effect of improving high-temperature proof stress. In order to achieve this effect, the Ti content is preferably 0.01 % or more. The Ti content is more preferably 0.03 % or more. If the Ti content is more than 0.30 %, toughness decreases. Accordingly, in the case where Ti is added, the Ti content is 0.30 % or less. The Ti content is preferably 0.20 % or less.

REM: 0.50 % or less

REM (rare earth metals) refers to Sc, Y, and lanthanoid elements (La, Ce, Pr, Nd, Sm, and other elements with atomic numbers from 57 to 71). REM is an element that improves oxidation resistance. In order to achieve this effect, the REM content is preferably 0.01 % or more. If the REM content is more than 0.50 %, the steel embrittles. Accordingly, in the case where REM is added, the REM content is 0.50 % or less.

Zr: 0.50 % or less

Zr is an element that improves oxidation resistance. In order to achieve this effect, the Zr content is preferably 0.01 % or more. If the Zr content is more than 0.50 %, Zr intermetallic compounds precipitate and embrittle the steel. Accordingly, in the case where Zr is added, the Zr content is 0.50 % or less.

Co: 0.50 % or less

Co is an element that is effective in improving the toughness of the steel. In order to achieve this effect, the Co content is preferably 0.01 % or more. The Co content is more preferably 0.02 % or more, and further preferably 0.03 % or more. Co is, however, an expensive element. Moreover, if the Co content is more than 0.50 %, the effect is saturated. Accordingly, in the case where Co is added, the Co content is 0.50 % or less. The Co content is preferably 0.20 % or less, and more preferably 0.10 % or less.

B: 0.0050 % or less

B is an element that is effective in improving the workability, especially secondary workability, of the steel. In order to achieve this effect, the B content is preferably 0.0002 % or more. The B content is more preferably 0.0005 % or more. If the B content is more than 0.0050 %, coarse BN forms and the workability of the steel decreases. Accordingly, in the case where B is added, the B content is 0.0050 % or less. The B content is preferably 0.0020 % or less.

Ca: 0.0050 % or less

Ca is an element that is effective in preventing nozzle clogging due to the precipitation of inclusions that are likely to form during continuous casting. In order to achieve this effect, the Ca content is preferably 0.0002 % or more. The Ca content is more preferably 0.0005 % or more. In order to achieve good surface characteristics without surface defects, the Ca content is preferably 0.0050 % or less. Accordingly, in the case where Ca is added, the Ca content is 0.0050 % or less. The Ca content is preferably 0.0030 % or less, and more preferably 0.0020 % or less.

Mg: 0.0050 % or less

Mg is an element that improves the equiaxed crystal ratio of the slab and improves workability and toughness. In steel having a chemical composition containing Nb, Mg also has the effect of suppressing the coarsening of Nb carbonitrides. In order to achieve these effects, the Mg content is preferably 0.0002 % or more. The Mg content is more preferably 0.0004 % or more. If the Mg content is more than 0.0050 %, the surface characteristics of the steel degrade. Accordingly, in the case where Mg is added, the Mg content is 0.0050 % or less. The Mg content is preferably 0.0030 % or less, and more preferably 0.0020 % or less.

Sb: 0.50 % or less

Sb is an element that has the effect of improving the toughness of the steel. In order to achieve this effect, the Sb content is preferably 0.01 % or more. The Sb content is more preferably 0.03 % or more. If the Sb content is more than 0.50 %, the toughness of the steel decreases. Accordingly, in the case where Sb is added, the Sb content is 0.50 % or less. The Sb content is preferably 0.30 % or less.

Sn: 0.50 % or less

Sn is an element that has the effect of improving the corrosion resistance and high-temperature strength of the steel. In order to achieve this effect, the Sn content is preferably 0.01 % or more. The Sn content is more preferably 0.03 % or more. If the Sn content is more than 0.50 %, the workability of the steel decreases. Accordingly, in the case where Sn is added, the Sn content is 0.50 % or less. The Sn content is preferably 0.30 % or less.

The balance other than the above-described elements consists of Fe and inevitable impurities. Each of the foregoing optionally added elements may be 0 %. For each of V, W, Ti, REM, Zr, Co, B, Ca, Mg, Sb, and Sn among the foregoing optionally added elements, if its content is less than the preferred lower limit, the element can be regarded as being contained as an inevitable impurity.

Next, the steel microstructure of the ferritic stainless steel according to an embodiment of the present disclosure will be described.

The steel microstructure of the ferritic stainless steel according to an embodiment of the present disclosure contains ferrite phase of 97 % or more in area ratio. The area ratio of ferrite phase may be 100 %, that is, ferrite single phase.

The area ratio of residual microstructures other than ferrite phase is 3 % or less. An example of such residual microstructures is martensite phase.

The area ratio of ferrite phase is determined as follows.

A test piece for cross-sectional observation is prepared from stainless steel as a sample, and etched with a picric acid saturated hydrochloric acid solution. The test piece is then observed for 10 observation fields using an optical microscope with 100 magnification, and martensite phase and ferrite phase are distinguished based on microstructure shape. Following this, the area ratio of ferrite phase is obtained by image processing, and its average value is calculated to determine the area ratio of ferrite phase.

The area ratio of residual microstructures is obtained by subtracting the area ratio of ferrite phase from 100 %.

It is important that, in the ferritic stainless steel according to an embodiment of the present disclosure, the microstructure is substantially ferrite single phase as described above and also the amount of solute Nb is more than 1.00 mass%.

Amount of solute Nb: more than 1.00 mass%

Nb effectively contributes to improving high-temperature proof stress particularly when present in the steel in a solid solution state. In other words, if Nb precipitates as carbides and nitrides, such as NbC and NbN, and Laves phase, the effect of improving high-temperature proof stress decreases. Hence, from the viewpoint of achieving the desired high-temperature proof stress, the amount of solute Nb is more than 1.00 mass%. The amount of solute Nb is preferably 1.50 mass% or more. No upper limit is placed on the amount of solute Nb, but the amount of solute Nb is, for example, preferably 2.50 mass% or less and more preferably 2.00 mass% or less. In order to cause the amount of solute Nb to be more than 1.00 mass%, the final annealing temperature needs to be 1120 °C or higher, as described later. The final annealing temperature is preferably 1200 °C or higher in order to cause the amount of solute Nb to be 1.50 mass% or more. The amount of solute Nb is calculated by subtracting the amount of precipitated Nb from the Nb content in the chemical composition (i.e. the total amount of Nb in the steel). This will be described in detail in the EXAMPLES section below.

Examples of the shape of the ferritic stainless steel according to an embodiment of the present disclosure include a sheet (steel sheet) or a pipe or tube (for example, a round pipe or tube or square pipe or tube obtained by making a steel sheet into a pipe or tube).

The thickness of the ferritic stainless steel according to an embodiment of the present disclosure (the sheet thickness of the steel sheet or the wall thickness of the pipe or tube) is not limited, but is preferably 0.5 mm to 2.5 mm. The thickness of the ferritic stainless steel according to an embodiment of the present disclosure is more preferably 1.0 mm or more. The thickness of the ferritic stainless steel according to an embodiment of the present disclosure is more preferably 1.5 mm or less.

The properties (high-temperature proof stress and oxidation resistance) of the ferritic stainless steel according to an embodiment of the present disclosure are as described above.

Next, a production method for a ferritic stainless steel according to an embodiment of the present disclosure will be described.

The production method for a ferritic stainless steel according to an embodiment of the present disclosure comprises: preparing a material to be treated having the foregoing chemical composition; and subjecting the material to be treated to a final annealing treatment at a final annealing temperature of 1120 °C or higher.

The production method for a ferritic stainless steel according to an embodiment of the present disclosure is a method of producing the above-described ferritic stainless steel according to an embodiment of the present disclosure.

The temperatures related to the production method are each based on the surface temperature of the slab, hot-rolled steel sheet, cold-rolled steel sheet, material to be treated, etc. unless otherwise noted.

[Preparation]

First, a material to be treated (i.e. a material to be subjected to the below-described final annealing treatment) having the foregoing chemical composition is prepared. The method of preparing the material to be treated is not limited.

For example, molten steel having the foregoing chemical composition is obtained by steelmaking in a known melting furnace such as a converter or an electric furnace through optional secondary refining, and formed into a slab by continuous casting or by ingot casting and blooming. Examples of secondary refining include ladle refining and vacuum refining. The VOD method is particularly preferable. From the viewpoint of productivity and quality, continuous casting is preferable. The slab is then heated, and subjected to hot rolling, hot-rolled sheet annealing, cold rolling, etc. according to conventional methods to obtain a cold-rolled steel sheet. In this way, a material to be treated having the foregoing chemical composition can be prepared. Cold rolling may be performed once, or twice or more with intermediate annealing therebetween. In addition, pickling may be performed as appropriate. Hot-rolled sheet annealing may be omitted. A hot-rolled steel sheet obtained as a result of hot rolling may be used as a material to be treated having the foregoing chemical composition, depending on the intended use.

Although the conditions for each of the above-described steps may be in accordance with conventional methods, for example, it is preferable that the slab heating temperature is 1100 °C to 1250 °C, the sheet thickness of the hot-rolled steel sheet obtained as a result of hot rolling is 3 mm to 6 mm, and the total rolling reduction ratio of cold rolling is 50 % or more (more preferably 60 % or more, and further preferably 70 % or more). No upper limit is placed on the total rolling reduction ratio of cold rolling, but the total rolling reduction ratio of cold rolling is preferably 90 % or less, for example.

[Final annealing treatment]

It is important that the material to be treated prepared as described above is then subjected to a final annealing treatment at a final annealing temperature of 1120 °C or higher. The above-described ferritic stainless steel according to an embodiment of the present disclosure can thus be obtained.

Final annealing temperature: 1120 °C or higher

In the final annealing treatment, Nb precipitated as carbides and nitrides, such as NbC and NbN, and Laves phase (hereafter also referred to as Laves phase, etc.) is dissolved. When the final annealing temperature is higher, Laves phase, etc. are dissolved more, resulting in a larger amount of solute Nb. In order to cause the amount of solute Nb to be more than 1.00 mass%, the final annealing temperature needs to be 1120 °C or higher. The final annealing temperature is preferably 1150 °C or higher and more preferably 1200 °C or higher. If the final annealing temperature is higher than 1250 °C, workability may decrease due to coarsening of crystal grains. The final annealing temperature is therefore preferably 1250 °C or lower. Herein, the final annealing temperature is the maximum arrival temperature in the final annealing treatment. Moreover, the final annealing time (described later) is the holding (retention) time in the temperature range from (the final annealing temperature - 10 °C) to the final annealing temperature. The temperature during the holding does not need to be constant. In the case where a hot-rolled steel sheet is used as the material to be treated, hot-rolled sheet annealing may be performed as a final annealing treatment, with the annealing temperature in the hot-rolled sheet annealing being controlled within the foregoing range.

If the final annealing time is less than 3 seconds, it may be difficult to cause the amount of solute Nb to be more than 1.00 mass% due to insufficient dissolution of Laves phase, etc. The final annealing time is therefore preferably 3 seconds or more. The final annealing time is more preferably 30 seconds or more. If the final annealing time is more than 600 seconds, workability may decrease due to coarsening of crystal grains. The final annealing time is therefore preferably 600 seconds or less. The final annealing time is more preferably 120 seconds or less.

The conditions of the final annealing treatment other than those described above are not limited and may be in accordance with conventional methods. The final annealing treatment may be performed by continuous annealing.

After the final annealing treatment, pickling may be performed as appropriate. Brush grinding may be performed before pickling. Furthermore, skin pass rolling or the like may be performed to adjust the shape, surface roughness, and material properties of the steel sheet depending on the intended use.

The ferritic stainless steel thus obtained (for example, a hot-rolled product such as a hot-rolled steel sheet, or a cold-rolled product such as a cold-rolled steel sheet) is then subjected to work such as cutting, bending, bulging, and drawing depending on the intended use, and thus formed into a member. Examples of the member include automotive exhaust pipes, exhaust ducts of thermal power plants, and fuel cell-related members (such as separators, interconnectors, and reformers). The method of welding these members is not limited. For example, typical arc welding such as metal inert gas (MIG), metal active gas (MAG), and tungsten inert gas (TIG), resistance welding such as spot welding and seam welding, high-frequency resistance welding such as electric resistance welding, and high-frequency induction welding may be used.

The production conditions other than those described above are not limited and may be in accordance with conventional methods.

EXAMPLES

Steels having the chemical compositions shown in Table 1 (with the balance consisting of Fe and inevitable impurities) were each obtained by steelmaking in a vacuum melting furnace, and cast into a 50 kg steel ingot. The steel ingot was then heated to 1200 °C and hot rolled to obtain a sheet bar with a thickness of 35 mm. A sheet bar with a length of 200 mm was cut out from the obtained sheet bar. The cut sheet bar was heated to 1150 °C and then hot rolled to obtain a hot-rolled steel sheet with a sheet thickness of 5 mm. The hot-rolled steel sheet was then subjected to hot-rolled sheet annealing at a hot-rolled sheet annealing temperature in the range of 1100 °C to 1250 °C. The hot-rolled steel sheet after the hot-rolled sheet annealing (hereafter also referred to as a hot-rolled and annealed sheet) was then ground. Following this, the hot-rolled and annealed sheet was cold rolled at a rolling reduction ratio of 60 % to prepare a cold-rolled steel sheet with a sheet thickness of 2.0 mm as a material to be treated (a material to be subjected to a final annealing treatment). The prepared cold-rolled steel sheet was then subjected to a final annealing treatment under the condition shown in Table 1 to obtain a ferritic stainless steel. The cold-rolled steel sheet after the final annealing treatment is hereafter also referred to as a cold-rolled and annealed sheet. The final annealing time was 15 seconds in all cases. Identifying the steel microstructure of each obtained ferritic stainless steel by the foregoing method revealed that the steel microstructure contained ferrite phase of 97 % or more in area ratio. For reference, a cold-rolled and annealed sheet was also prepared under the same conditions as above for SUS444 (No. 27), which is one of the steel types exhibiting the highest heat resistance among conventional ferritic stainless steels. Then, the amount of solute Nb was measured and high-temperature proof stress and oxidation resistance were evaluated as described below. The conditions not stated were in accordance with conventional methods.

The amount of solute Nb in each obtained ferritic stainless steel was measured as follows. The measurement results are shown in Table 1.

<Measurement of amount of solute Nb>

A small piece of 10 mm in width and 50 mm in length was cut out from the obtained ferritic stainless steel, and the oxide coating on all sides (six sides) of the small piece was removed by polishing. After this, quantitative analysis of precipitates was performed using the small piece. In detail, the small piece was subjected to constant-current electrolysis in 10 vol% acetylacetone-1 mass% tetramethylammonium chloride-methanol (hereafter also referred to as a 10 % AA electrolytic solution) using an electrolyzer SPEED ANALYZER FV-128 produced by Fujiwara Scientific Co., Ltd., to extract precipitates. A cellulose acetate membrane filter (pore size: 0.2 $\mu$m, 47 mm$\varphi$) was used to filter the extraction residue. The collected extraction residue was placed in a platinum crucible together with the filter and incinerated at 580 °C. After this, 0.75 g $Na_2O_2$ + 0.75 g $LiBO_4$ were added to the incinerated extraction residue, and the mixture was melted by a gas burner. The resulting melt was dissolved by adding 25 ml of 0.8 mass% tartaric acid/10 vol% sulfuric acid, and the solution was adjusted to 100 ml with pure water. Using this solution, the amount of precipitated Nb (the percentage of the mass of precipitated Nb to the mass of the small piece) was quantified by an ICP emission spectrometric analyzer. The quantified amount of precipitated Nb was then subtracted from the Nb content in the chemical composition of the steel to yield the amount of solute Nb (mass%).

Moreover, for each obtained ferritic stainless steel, (1) high-temperature proof stress and (2) oxidation resistance were evaluated by the following test methods. The evaluation results are shown in Table 1.

(1) High-temperature proof stress

The obtained ferritic stainless steel was machined to produce a test piece with the shape illustrated in FIG. 1. The parallel portion was 60 mm. The produced test piece was heated to 800 °C and held for 15 minutes. After this, a tensile test was performed to measure 0.2 % proof stress (MPa). The tension rate was 0.2 mm/min (strain rate: $5.6 \times 10^{-5}$/s). The high-temperature proof stress was evaluated based on the following criteria:

Very good (pass): 80 MPa or more
Good (pass): 60 MPa or more and less than 80 MPa
Poor (fail): less than 60 MPa.

(2) Oxidation resistance

The obtained ferritic stainless steel was machined to produce a test piece of 20 mm in width and 30 mm in length. All sides (six sides) of the test piece were polished with #320 emery paper. After this, the test piece was degreased with acetone, and then the dimensions and mass of the test piece were measured. Next, the test piece was hung in an electric furnace set at 1000 °C and soaked (held) in an air atmosphere for 200 hours. After the holding, the furnace was cooled to room temperature. Subsequently, the mass of the test piece was measured, and the mass gain by oxidation was calculated using the following formula:

[Mass gain by oxidation (g/m$^2$)] = [Mass gain of test piece between before and after holding (g)]/[Surface area of test piece (all sides) (m$^2$)].

The oxidation resistance was then evaluated based on the following criteria:

Very good (pass): mass gain by oxidation of less than 10 g/m$^2$

Good (pass): mass gain by oxidation of 10 g/m$^2$ or more and less than 20 g/m$^2$

Poor (fail): mass gain by oxidation of 20 g/m$^2$ or more.

Typically, if breakaway oxidation (abnormal oxidation) occurs, the mass gain by oxidation exceeds 50 g/m$^2$. In this test, however, the more stringent criterion of less than 20 g/m$^2$ was used as the pass criterion.

Table 1

| No. | Chemical composition (mass%) | | | | | | | | | | | | | Final annealing temperature | Amount of solute Nb (mass%) | Evaluation results | | Remarks |
|---|---|---|---|---|---|---|---|---|---|---|---|---|---|---|---|---|---|---|
| | C | Si | Mn | P | S | Al | N | Ni | Cr | Nb | Mo | [Si]-[Mn] | Others | | | High-temperature proof stress | Oxidation resistance | |
| 1 | 0.007 | 0.83 | 0.17 | 0.025 | 0.002 | 0.01 | 0.008 | 0.09 | 19.5 | 1.66 | 2.3 | 0.66 | | 1,150 °C | 1.20 | Good | Very good | Example |
| 2 | 0.007 | 1.88 | 0.18 | 0.035 | 0.002 | 0.04 | 0.008 | 0.11 | 19.6 | 1.64 | 1.8 | 1.70 | | 1,200 °C | 1.32 | Good | Very good | Example |
| 3 | 0.004 | 1.92 | 0.77 | 0.033 | 0.002 | 0.04 | 0.006 | 0.20 | 18.8 | 1.72 | 2.3 | 1.15 | | 1,200 °C | 1.58 | Very good | Very good | Example |
| 4 | 0.007 | 0.15 | 0.05 | 0.021 | 0.002 | 0.34 | 0.010 | 0.13 | 19.9 | 1.74 | 1.8 | 0.10 | | 1,200 °C | 1.59 | Very good | Very good | Example |
| 5 | 0.005 | 0.87 | 0.41 | 0.026 | 0.001 | 0.30 | 0.007 | 0.11 | 19.9 | 1.73 | 1.7 | 0.46 | | 1,200 °C | 1.62 | Very good | Very good | Example |
| 6 | 0.004 | 0.19 | 0.08 | 0.035 | 0.001 | 0.03 | 0.005 | 0.91 | 19.4 | 1.60 | 1.8 | 0.11 | | 1,150 °C | 1.18 | Good | Good | Example |
| 7 | 0.007 | 0.18 | 0.08 | 0.024 | 0.001 | 0.02 | 0.008 | 0.06 | 14.8 | 1.65 | 2.2 | 0.10 | | 1,150 °C | 1.15 | Good | Good | Example |
| 8 | 0.006 | 0.23 | 0.13 | 0.021 | 0.001 | 0.02 | 0.005 | 0.03 | 24.2 | 1.67 | 1.6 | 0.10 | | 1,200 °C | 1.54 | Very good | Very good | Example |
| 9 | 0.005 | 0.18 | 0.07 | 0.034 | 0.002 | 0.01 | 0.007 | 0.07 | 19.8 | 1.14 | 2.7 | 0.11 | | 1,150 °C | 1.02 | Good | Good | Example |
| 10 | 0.004 | 0.18 | 0.09 | 0.027 | 0.001 | 0.03 | 0.006 | 0.14 | 18.2 | 2.82 | 2.1 | 0.09 | | 1,250 °C | 2.00 | Very good | Good | Example |
| 11 | 0.005 | 0.16 | 0.07 | 0.028 | 0.002 | 0.02 | 0.008 | 0.12 | 18.8 | 1.48 | 1.2 | 0.09 | | 1,200 °C | 1.33 | Good | Good | Example |
| 12 | 0.004 | 0.27 | 0.15 | 0.032 | 0.001 | 0.04 | 0.004 | 0.07 | 19.0 | 1.63 | 3.6 | 0.12 | | 1,150 °C | 1.19 | Very good | Good | Example |
| 13 | 0.007 | 0.19 | 0.10 | 0.035 | 0.002 | 0.02 | 0.008 | 0.17 | 19.5 | 1.80 | 2.4 | 0.09 | Cu:0.39 | 1,150 °C | 1.25 | Good | Good | Example |
| 14 | 0.005 | 0.30 | 0.17 | 0.027 | 0.001 | 0.02 | 0.007 | 0.19 | 18.9 | 1.60 | 2.0 | 0.13 | Cu:1.22 | 1,150 °C | 1.11 | Very good | Good | Example |
| 15 | 0.006 | 0.24 | 0.14 | 0.023 | 0.002 | 0.02 | 0.009 | 0.12 | 19.8 | 1.75 | 2.3 | 0.10 | V:0.19 | 1,200 °C | 1.61 | Very good | Good | Example |
| 16 | 0.006 | 0.22 | 0.08 | 0.029 | 0.001 | 0.01 | 0.009 | 0.03 | 19.9 | 1.77 | 1.9 | 0.14 | W:2.9 | 1,150 °C | 1.25 | Very good | Good | Example |
| 17 | 0.004 | 0.20 | 0.08 | 0.023 | 0.002 | 0.03 | 0.008 | 0.13 | 19.2 | 1.66 | 2.3 | 0.12 | Ti:0.19 | 1,200 °C | 1.58 | Very good | Good | Example |
| 18 | 0.008 | 0.19 | 0.09 | 0.020 | 0.003 | 0.04 | 0.009 | 0.16 | 18.1 | 1.67 | 2.2 | 0.10 | REM:0.12 | 1,200 °C | 1.51 | Very good | Very good | Example |
| 19 | 0.006 | 0.23 | 0.13 | 0.022 | 0.002 | 0.02 | 0.008 | 0.11 | 19.6 | 1.66 | 1.7 | 0.10 | Zr:0.07 | 1,150 °C | 1.17 | Good | Good | Example |
| 20 | 0.005 | 0.16 | 0.06 | 0.034 | 0.002 | 0.01 | 0.005 | 0.16 | 19.6 | 1.69 | 2.3 | 0.10 | Co:0.05 | 1,150 °C | 1.27 | Good | Good | Example |
| 21 | 0.007 | 0.17 | 0.06 | 0.032 | 0.002 | 0.03 | 0.007 | 0.13 | 19.7 | 1.71 | 2.5 | 0.11 | Sb:0.10 | 1,200 °C | 1.55 | Very good | Good | Example |
| 22 | 0.005 | 0.24 | 0.12 | 0.028 | 0.002 | 0.04 | 0.005 | 0.19 | 18.8 | 1.60 | 1.8 | 0.12 | Sn:0.13 | 1,200 °C | 1.47 | Very good | Good | Example |
| 23 | 0.005 | 0.21 | 0.10 | 0.020 | 0.003 | 0.02 | 0.005 | 0.12 | 18.2 | 1.79 | 2.2 | 0.11 | B:0.0011 | 1,200 °C | 1.67 | Very good | Good | Example |
| 24 | 0.005 | 0.27 | 0.18 | 0.029 | 0.001 | 0.01 | 0.007 | 0.16 | 19.1 | 1.75 | 2.1 | 0.09 | Ca:0.0018 | 1,200 °C | 1.61 | Very good | Good | Example |
| 25 | 0.006 | 0.24 | 0.13 | 0.020 | 0.002 | 0.01 | 0.005 | 0.05 | 19.1 | 1.44 | 2.0 | 0.11 | Mg:0.0012 | 1,200 °C | 1.34 | Good | Good | Example |
| 26 | 0.006 | 0.22 | 0.08 | 0.021 | 0.002 | 0.03 | 0.010 | 0.11 | 19.3 | 1.60 | 2.0 | 0.14 | W:3.4, B:0.0014 | 1,150 °C | 1.12 | Very good | Good | Example |
| 27 | 0.006 | 0.26 | 0.15 | 0.029 | 0.003 | 0.04 | 0.010 | 0.11 | 18.2 | <u>0.48</u> | 1.8 | 0.11 | | 1,150 °C | <u>0.30</u> | Poor | Good | Reference Example |
| 28 | 0.006 | <u>2.23</u> | 0.10 | 0.028 | 0.002 | 0.02 | 0.006 | 0.03 | 19.7 | 1.42 | 2.2 | 2.13 | | 1,200 °C | 0.97 | Poor | Very good | Comparative Example |
| 29 | 0.005 | 1.20 | <u>1.12</u> | 0.024 | 0.002 | 0.04 | 0.007 | 0.20 | 18.3 | 1.44 | 2.3 | 0.08 | | 1,150 °C | 1.03 | Good | Poor | Comparative Example |
| 30 | 0.005 | 0.18 | 0.05 | 0.029 | 0.001 | <u>0.65</u> | 0.006 | 0.08 | 18.0 | 1.65 | 1.8 | 0.13 | | 1,200 °C | 1.51 | Very good | Poor | Comparative Example |
| 31 | 0.006 | 0.20 | 0.08 | 0.025 | 0.003 | 0.04 | 0.005 | <u>1.33</u> | 18.0 | 1.70 | 2.2 | 0.12 | | 1,150 °C | 1.27 | Good | Poor | Comparative Example |
| 32 | 0.007 | 0.16 | 0.06 | 0.030 | 0.003 | 0.03 | 0.009 | 0.07 | <u>13.3</u> | 1.78 | 2.1 | 0.10 | | 1,200 °C | 1.57 | Very good | Poor | Comparative Example |
| 33 | 0.003 | 0.15 | 0.05 | 0.033 | 0.003 | 0.03 | 0.009 | 0.03 | 19.0 | <u>1.03</u> | 2.4 | 0.10 | | 1,150 °C | <u>0.93</u> | Poor | Good | Comparative Example |
| 34 | 0.006 | 0.23 | 0.09 | 0.030 | 0.001 | 0.02 | 0.006 | 0.17 | 19.5 | 1.68 | <u>0.8</u> | 0.14 | | 1,200 °C | 1.56 | Poor | Good | Comparative Example |
| 35 | 0.005 | 0.20 | 0.08 | 0.033 | 0.003 | 0.01 | 0.009 | 0.08 | 18.6 | 1.75 | <u>4.5</u> | 0.12 | | 1,150 °C | 1.28 | Poor | Good | Comparative Example |
| 36 | 0.006 | 0.16 | 0.28 | 0.029 | 0.002 | 0.02 | 0.008 | 0.10 | 19.2 | 1.68 | 2.1 | <u>-0.12</u> | | 1,200 °C | 1.51 | Very good | Poor | Comparative Example |
| 37 | 0.007 | 0.83 | 0.17 | 0.025 | 0.002 | 0.01 | 0.008 | 0.09 | 19.5 | 1.66 | 2.3 | 0.66 | | <u>1,100 °C</u> | <u>0.89</u> | Poor | Very good | Comparative Example |

Underlines indicate outside the scope of the present disclosure.

[Table 1]

As shown in Table 1, in each Example, excellent high-temperature proof stress and excellent oxidation resistance were achieved simultaneously. Moreover, in each Example, the high-temperature proof stress was higher than that of SUS444 (No.27), a steel type that exhibits the highest level of heat resistance among conventional ferritic stainless steels. In addition, the mass gain by oxidation was lower than or equal to that of SUS444.

In each Comparative Example, on the other hand, at least one of the high-temperature proof stress and oxidation resistance was insufficient.

In detail, in No. 28, the Si content was above the appropriate range, so that the amount of solute Nb was insufficient and the high-temperature proof stress was evaluated as fail.

In No.29, the Mn content was above the appropriate range, so that the oxidation resistance was evaluated as fail.

In No. 30, the Al content was above the appropriate range, so that the oxidation resistance was evaluated as fail.

In No. 31, the Ni content was above the appropriate range, so that the oxidation resistance was evaluated as fail.

In No. 32, the Cr content was below the appropriate range, so that the oxidation resistance was evaluated as fail.

In No. 33, the Nb content was below the appropriate range, so that the amount of solute Nb was insufficient and the high-temperature proof stress was evaluated as fail.

In No. 34, the Mo content was below the appropriate range, so that the high-temperature proof stress was evaluated as fail.

In No. 35, the Mo content was above the appropriate range, so that the high-temperature proof stress was evaluated as fail.

In No. 36, [Si] - [Mn] was below the appropriate range, so that the oxidation resistance was evaluated as fail.

In No. 37, the final annealing temperature was below the appropriate range, so that the amount of solute Nb was insufficient and the high-temperature proof stress was evaluated as fail.

INDUSTRIAL APPLICABILITY

The ferritic stainless steel according to an embodiment of the present disclosure is suitable for use as exhaust system members of automobiles, etc. The ferritic stainless steel according to an embodiment of the present disclosure is also suitable for use as exhaust system members of thermal power systems and solid oxide type fuel cell-related members (such as separators, interconnectors, and reformers).

**Claims**

1. A ferritic stainless steel comprising

    a chemical composition containing, in mass%,
    C: 0.015 % or less,
    Si: 0.05 % to 2.00 %,
    Mn: 0.05 % to 0.80 %,
    P: 0.040 % or less,
    S: 0.010 % or less,
    Al: 0.01 % to 0.50 %,
    N: 0.020 % or less,
    Ni: 0.02 % to 1.00 %,
    Cr: 14.0 % to 25.0 %,
    Nb: 1.10 % to 3.00 %, and
    Mo: 1.0 % to 4.0 %
    with a balance consisting of Fe and inevitable impurities, wherein the following formula (1) is satisfied:

$$[Si] - [Mn] > 0.00 \qquad \dots (1)$$

    where [Si] and [Mn] are respectively Si content and Mn content in mass% in the chemical composition, and an amount of solute Nb is more than 1.00 mass%.

2. The ferritic stainless steel according to claim 1, wherein the chemical composition further contains, in mass%, one or more selected from

    Cu: 2.00 % or less,

V: 0.50 % or less,
W: 5.0 % or less,
Ti: 0.30 % or less,
REM: 0.50 % or less,
Zr: 0.50 % or less,
Co: 0.50 % or less,
B: 0.0050 % or less,
Ca: 0.0050 % or less,
Mg: 0.0050 % or less,
Sb: 0.50 % or less, and
Sn: 0.50 % or less.

3. A production method for the ferritic stainless steel according to claim 1 or 2, the production method comprising:

preparing a material to be treated having the chemical composition according to claim 1 or 2; and
subjecting the material to be treated to a final annealing treatment at a final annealing temperature of 1120 °C or
higher.

# FIG. 1

## INTERNATIONAL SEARCH REPORT

International application No.

**PCT/JP2023/003284**

### A. CLASSIFICATION OF SUBJECT MATTER

*C22C 38/00*(2006.01)i; *C21D 9/46*(2006.01)i; *C22C 38/48*(2006.01)i; *C22C 38/60*(2006.01)i
FI: C22C38/00 302Z; C22C38/48; C22C38/60; C21D9/46 R

According to International Patent Classification (IPC) or to both national classification and IPC

### B. FIELDS SEARCHED

Minimum documentation searched (classification system followed by classification symbols)

C22C38/00; C21D9/46; C22C38/48; C22C38/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-45505 A (NIPPON STEEL STAINLESS STEEL CORP.) 22 March 2022 (2022-03-22) <br> entire text | 1-3 |
| A | WO 2018/181060 A1 (NIPPON STEEL & SUMIKIN STAINLESS STEEL CORP.) 04 October 2018 (2018-10-04) <br> entire text, all drawings | 1-3 |
| A | JP 5-78791 A (KAWASAKI STEEL CORP.) 30 March 1993 (1993-03-30) <br> entire text, all drawings | 1-3 |
| A | CN 107675075 A (WANG YESHUANG) 09 February 2018 (2018-02-09) <br> entire text | 1-3 |

☐ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **07 April 2023** | **18 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2023/003284**

| Patent document cited in search report | Publication date (day/month/year) | Patent family member(s) | Publication date (day/month/year) |
|---|---|---|---|
| JP 2022-45505 A | 22 March 2022 | (Family: none) | |
| WO 2018/181060 A1 | 04 October 2018 | CN 110462088 A entire text, all drawings KR 10-2019-0132455 A | |
| JP 5-78791 A | 30 March 1993 | (Family: none) | |
| CN 107675075 A | 09 February 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009215648 A
- JP H06088168 A
- JP 2004 A
- JP 018921 A
- JP 2004018921 A